# EUROPÄISCHE PATENTANMELDUNG

(11) **EP 0 958 767 A2**
(43) Veröffentlichungstag der Anmeldung: **24.11.1999**
(21) Anmeldenummer: 99108831.1
(22) Anmeldetag: 04.05.1999
(51) Int. Cl.: A47F 7/00, A47F 5/13

(54) **Gestell mit Behältern zum Anbieten von Blumen**

(30) Priorität: 11.05.1998 DE 29808460 U
(71) Anmelder: WANZL METALLWARENFABRIK GMBH, D-89336 Leipheim (DE)
(72) Erfinder: Polidar, Franz, 89343 Jettingen-Scheppach (DE)

(57) **Zusammenfassung**

Die Erfindung betrifft ein Gestell (1) mit Behältern (15) zum Anbieten von Blumen, wobei die Behälter (15) zur Aufnahme der Blumen vorgesehen sind und die Behälter (15) auf am Gestell (1) angeordneten Stellflächen (5, 5a, 5b) abstellbar oder einhängbar sind.
Die Erfindung zeichnet sich dadurch aus, daß ein Teil der Stellflächen (5, 5a, 5b) durch einen Teil eines Raumelementes (8) gebildet ist, das zur Aufnahme leerer Behälter (15) bestimmt ist.

## Beschreibung

Die Erfindung betrifft ein Gestell mit Behältern zum Anbieten von Blumen, wobei die Behälter zur Aufnahme der Blumen vorgesehen sind und die Behälter auf am Gestell angeordneten Stellflächen abstellbar oder einhängbar sind.

Gestelle dieser Gattung sind durch viele Ausführungsformen bekannt. Das geordnete Unterbringen leerer Behälter hat sich bei den bekannten Gestellen jedoch als Problem erwiesen.

Die Aufgabe der Erfindung besteht darin, ein Gestell der hier vorliegenden Art so zu verbessern, daß leere Behälter in geordneter Weise am Gestell untergebracht werden können, ohne daß die Größe von wenigstens einer der Stellflächen verringert wird.

Die Lösung der Aufgabe besteht darin, daß ein Teil der Stellflächen durch einen Teil eines Raumelementes gebildet ist, das zur Aufnahme der leeren Behälter bestimmt ist.

Eine bevorzugte und vorteilhafte Ausführungsform besteht darin, daß eine im unteren Bereich des Gestelles befindliche Stellfläche als Stufe ausgebildet und diese Stufe zu einem quaderförmigen Raumelement weiterentwickelt ist, das durch eine bewegliche Wand oder Klappe geöffnet und geschlossen werden kann. Die Stellfläche wird durch einen unteren und einen höher gelegenen Stellflächenabschnitt gebildet, wobei beide Stellflächenabschnitte gemeinsam genau so groß sind, wie eine Stellfläche, die nur eine Ebene beanspruchen würde. Auf den Stellflächenabschnitten lassen sich Behälter abstellen oder einhängen. Durch die stufenförmige Anordnung der Stellflächenabschnitte lassen sich -wählt man den hinteren Stellflächenabschnitt höher- Blumen äußerst vorteilhaft präsentieren. Durch die zweckmäßige Weiterentwicklung der so gebildeten Stufe zu einem Raumelement, lassen sich leere Behälter, ohne störend zu wirken, platzsparend unterbringen. Es erweist sich ferner als vorteilhaft, wenn die Größe des Raumelementes so gewählt ist, daß alle Behälter, die auf dem Gestell abstellbar sind, Platz im Raumelement finden. Dies führt zu einem geordneten Unterbringen der Behälter dann, wenn diese nicht benötigt werden. Beim Versand der Gestelle kann die maximale Menge der Behälter pro Gestell im Raumelement untergebracht werden, so daß der Käufer solcher Gestelle jeweils sofort die passende Anzahl der Behälter zur Verfügung hat. Ein Aufbewahren der Behälter außerhalb des oder der Gestelle scheidet aus. Dies ist ebenfalls ein großer Vorteil.

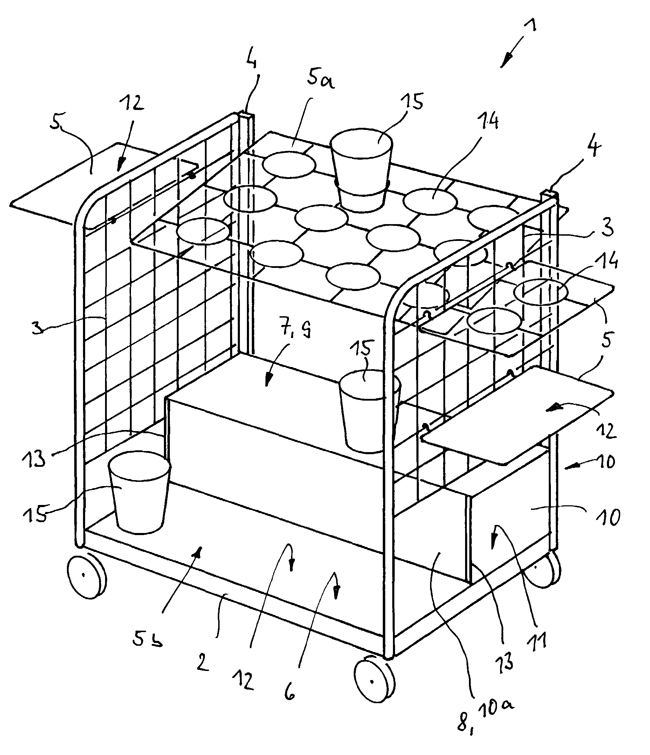

Die Erfindung wird anhand eines variabel gestaltbaren Ausführungsbeispieles unter Zuhilfenahme der Zeichnung näher erläutert.

Das beispielhaft gezeigte Gestell 1 besitzt einen Rahmen 2, der zum Tragen verschiedener Stellflächen 5, 5a, 5b geeignet ist. Am Rahmen 2 sind zwei gegenüberliegende Wände 3 vorgesehen, an welchen Stellflächen 5 lösbar befestigt werden können. Zwischen den Wänden 3 ist im oberen Bereich eine obere Stellfläche 5a angeordnet. Unterhalb der oberen Stellfläche 5a ist eine untere Stellfläche 5b vorgesehen, die aus zwei stufenartig angeordneten Stellflächenabschnitten 6, 7 gebildet ist. Der untere Stellflächenabschnitt 6 ist näher zum Käufer der Blumen gerichtet. Der obere Stellflächenabschnitt 7 ist, bezogen aufeinen Käufer, am Gestell 2 weiter hinten angeordnet. Der obere Stellflächenabschnitt 7 ist der obere Teil 9 eines quaderförmigen Raumelementes 8, das durch weitere vier Wandabschnitte 10 und einen Boden 11 gebildet ist. Das Raumelement 8 eignet sich zur Aufnahme leerer Behälter 15, die wiederum mit Blumen bestückt, auf den Stellflächen 5, 5a, 5b abgestellt oder in diese eingehängt werden können. Ein Teil der vorhandenen Stellflächen 5, 5a, 5b ist somit durch einen Teil des Raumelementes 8 gebildet. Man kann den oberen Teil 9 des Raumelementes 8, wie einen Deckel gestaltet, über Scharniere an einen der vier Wandabschnitte 10 gelenkig anbinden. Man kann aber auch den vorderen Wandabschnitt 10a, der dem Käufer von Blumen zugewandt ist, in senkrecht angeordneten Führungen 13 lagern, so daß der vordere Wandabschnitt 10a entlang einer senkrechten Ebene bewegbar ist und auch nach oben aus den Führungen 13 herausgezogen werden kann, um eine Öffnung am Raumelement 8 entstehen zu lassen. Es ist auch möglich, den oberen Teil 9 des Raumelementes 8 in horizontalen Führungen 13 verschiebbar anzuordnen. Auf eine Treppe oder Stufe übertragen bilden der untere und der obere Stellflächenabschnitt 6, 7 die Trittstufen und der vordere Wandabschnitt 10a die Setzstufe. Das Raumelement 8 kann fest und ohne geeignetes Werkzeug nicht lösbar am Gestell 1 angeordnet sein. Es ist jedoch auch möglich, am Raumelement 8 zwei in der Zeichnung nicht dargestellte Hakenkonsolen anzuordnen, die paarweise in Schlitze eingreifen, die sich an zwei hinteren Rahmenpfosten 4 befinden. Wenn die Rahmenpfosten 4 als sogenannte 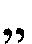 geschlitzte Rohre" gestaltet sind, kann das Raumelement 8 wahlweise verschieden hoch am Gestell 1 angeordnet werden. Es ist deshalb von Vorteil, auch die obere Stellfläche 5a mit Hakenkonsolen auszustatten, so daß die obere Stellfläche 5a ebenfalls verschieden hoch angeordnet werden kann. Es ist ferner zweckmäßig, die gegenüberliegenden Wände 3 als Gitterkonstruktionen oder mit passenden Öffnungen versehen zu gestalten, so daß weitere Stellflächen 5 an den Wänden 3 durch Einhängen lösbar befestigt werden können.
Die Stellflächen 5, 5a, 5b sind in der Regel ebenflächig gestaltet. Sie können durch Platten gebildete, geschlossene Böden 12 aufweisen, wie dies im Beispiel die untere Stellfläche 5b und zwei der an den Wänden 3 befindlichen Stellflächen 5 sind, so daß Behälter 15 auf den so gestalteten Stellflächen 5, 5b abstellbar sind. Es ist jedoch auch zweckmäßig, die Stellflächen 5, 5a beispielsweise mit runden Durchbrüchen 14 auszustatten, in welche Behälter 15 von oben her einsteckbar sind. Die Stellflächen 5, 5a, 5b können wahlweise auch Böden 12 und Durchbrüche 14 aufweisen. Das Gestell 1 kann feststehend ausgebildet sein oder Räder zum Fahren aufweisen. Die Behälter 15 sind leicht konisch gestaltet, was sowohl das Einstecken in die mit Öffnungen versehenen Stellflächen 5, 5a erleichtert, als auch ein Zusammenstecken mit weiteren Behältern 15 erlaubt, wenn es gilt, leere Behälter 15 im Raumelement 8 platzsparend unterzubringen.

## Patentansprüche

1. Gestell (1) mit Behältern (15) zum Anbieten von Blumen, wobei die Behälter (15) zur Aufnahme der Blumen vorgesehen sind und die Behälter (15) auf am Gestell (1) angeordneten Stellflächen (5, 5a, 5b) abstellbar oder einhängbar sind, dadurch **gekennzeichnet**, daß ein Teil der Stellflächen (5, 5a, 5b) durch einen Teil eines Raumelementes (8) gebildet ist, das zur Aufnahme leerer Behälter (15) bestimmt ist.

2. Gestell mit Behältern nach Anspruch 1, dadurch **gekennzeichnet**, daß das Raumelement (8) einen oberen Teil (9) aufweist, der als bewegbarer Deckel gestaltet ist.

3. Gestell mit Behältern nach Anspruch 1, dadurch **gekennzeichnet**, daß das Raumelement (8) einen Wandabschnitt (10a) aufweist, der in senkrechten Führungen bewegbar gelagert ist.

4. Gestell mit Behältern nach einem der Ansprüche 1 bis 3, dadurch **gekennzeichnet**, daß Rahmenpfosten (4) vorgesehen sind, an welchen entweder das Raumelement (8) oder die obere Stellfläche (5a) oder das Raumelement (8) und die obere Stellfläche (5a) verschieden hoch befestigbar sind.

5. Gestell nach einem der Ansprüche 1 bis 4, dadurch **gekennzeichnet**, daß an der oberen Abstellfläche (5a) und/oder am Raumelement (8) Hakenkonsolen angeordnet sind, die zum Eingreifen in Schlitze bestimmt sind, die sich an den Rahmenpfosten (4) befinden.

6. Gestell nach einem der Ansprüche 1 bis 5, dadurch **gekennzeichnet**, daß zwei gegenüberliegende Wände (3) vorgesehen sind, die als Gitterkonstruktion oder mit Durchbrüchen ausgestattet gestaltet sind.

7. Gestell nach Anspruch 6, dadurch **gekennzeichnet**, daß an den Wänden (3) Stellflächen (5) einhängbar sind.

8. Gestell nach einem der Ansprüche 1 bis 7, dadurch **gekennzeichnet**, daß die Stellflächen (5, 5a, 5b) ebene, geschlossene Böden (12) aufweisen und/oder mit Durchbrüchen (14) ausgestattet sind.

9. Gestell nach einem der Ansprüche 1 bis 8, dadurch **gekennzeichnet,** daß die Behälter (15) konisch gestaltet sind.

10. Gestell nach Anspruch 9, dadurch **gekennzeichnet**, daß die Behälter (15) ineinandersteckbar sind.
